# EUROPÄISCHE PATENTSCHRIFT

(11) **EP 3 560 740 B1**
(45) Veröffentlichungstag und Bekanntmachung des Hinweises auf die Patenterteilung: **06.01.2021**
(21) Anmeldenummer: 19155641.4
(22) Anmeldetag: 06.02.2019
(51) Int. Cl.: B60J 1/00, B62D 65/06, B05C 5/00, B05C 5/02

(54) **VERFAHREN UND VORRICHTUNG ZUM MONTIEREN EINER FAHRZEUGSCHEIBE**
METHOD AND DEVICE FOR FITTING A VEHICLE RAIL
PROCÉDÉ ET DISPOSITIFS DE MONTAGE D'UNE VITRE DE VÉHICULE

(30) Priorität: 09.04.2018 DE 102018002898
(43) Veröffentlichungstag der Anmeldung: 30.10.2019
(73) Patentinhaber: CLAAS Selbstfahrende Erntemaschinen GmbH, 33428 Harsewinkel (DE)
(72) Erfinder: Luttermann, Carla, 33428 Harsewinkel (DE); Kuschel, Manfred, 33428 Harsewinkel (DE); Schneipel, Viktor, 33428 Harsewinkel (DE); Dohmann, Stephan, 37671 Höxter (DE)
(74) Vertreter: CLAAS Gruppe

(56) Entgegenhaltungen:
- EP-A1- 0 707 937
- DE-T5-112008 001 607
- FR-A1- 2 959 475
- FR-A1- 2 963 757
- US-A- 4 841 698
- US-A1- 2013 092 324

## Beschreibung

Die vorliegende Erfindung betrifft ein Verfahren und eine Vorrichtung zum Montieren einer Fahrzeugscheibe in einem Rahmen, typischerweise einem Fensterrahmen eines Fahrzeugs.

Ein solches Verfahren ist in DE 11 2008 001607 T5 offenbart und eine solche Vorrichtung in EP 0 707 937 A1.

Die zum Einkleben einer Fahrzeugscheibe in einem Rahmen verwendeten Kleb- und Dichtstoffe müssen schnell härtend sein, um nach dem Platzieren der Fahrzeugscheibe am Rahmen eine Relativbewegung zwischen beiden zu verhindern, ohne dass ein zum Positionieren der Fahrzeugscheibe am Rahmen verwendetes Werkzeug nach dem Positionieren noch lange am Ort bleiben muss, sondern nach kurzer Zeit wieder verfügbar ist, um eine weitere Fahrzeugscheibe zu platzieren. Das schnelle Härten bringt es mit sich, dass die Oberfläche einer in herkömmlicher Weise auf dem Rand der Fahrzeugscheibe ausgebrachten Klebstoffraupe bereits begonnen hat, auszuhärten, bevor die Scheibe platziert werden kann. Wenn sich dann herausstellt, dass die Fahrzeugscheibe noch einmal bewegt werden muss, um z.B. eine einheitliche Spaltbreite zwischen den Kanten der Fahrzeugscheibe und gegenüberliegenden Flanken des Rahmens zu erreichen, dann kann eine solche Bewegung dazu führen, dass der Klebstoff sich vom Rahmen oder der Fahrzeugscheibe wieder ablöst und später keine dichte Verbindung zwischen Fahrzeugscheibe und Rahmen wieder zustande kommt.

EP 0 351 369 B1 schlägt vor, dieses Problem zu lösen, indem auf dem Rand einer Fahrzeugscheibe ein strukturierter Klebstoffstrang aufgebracht wird, wobei ein erster Teilstrang einen Hohlraum bildet, in dem ein noch klebfähiger zweiter Teilstrang untergebracht ist, und der zweite Teilstrang beim Platzieren der Fahrzeugscheibe im Rahmen wenigstens teilweise aus dem ersten Teilstrang herausgedrückt und mit dem Rahmen in Kontakt gebracht wird, um die Fahrzeugscheibe am Rahmen zu verkleben.

Da der zweite Teilstrang im Innern des ersten vor Luftzutritt geschützt ist, bleibt er lange Zeit klebfähig und wird erst durch den Austritt aus dem ersten Teilstrang aktiviert.

Hier ergibt sich allerdings das Problem, eine sichere Klebung zwischen der Fahrzeugscheibe und dem ersten Teilstrang herzustellen. Die vorgeschlagene Verwendung eines Primers macht das Verfahren im Vergleich zur herkömmlichen Aufbringung einer Klebstoffraupe ohne innere Struktur kompliziert und aufwendig.

Aufgabe der vorliegenden Erfindung ist, ein Verfahren für eine einfache und wirtschaftliche Montage einer Fahrzeugscheibe und eine Vorrichtung zur Durchführung des Verfahrens zu schaffen.

Die Aufgabe wird zum einen gelöst durch ein Verfahren zum Montieren einer Fahrzeugscheibe in einem Rahmen, der einen nach der Montage einer Hauptoberfläche der Fahrzeugscheibe gegenüberliegenden Rahmengrund und eine einer Kante der Fahrzeugscheibe gegenüberliegende Rahmenflanke umfasst, mit den Schritten
a) Platzieren der Fahrzeugscheibe am Rahmen unter Freihaltung eines ersten Spalts zwischen der Hauptoberfläche und dem Rahmengrund,
b) Einbringen eines Klebstoffs in den ersten Spalt;
c) Zustellen der Fahrzeugscheibe in Richtung des Rahmengrunds.

Indem zuerst die Fahrzeugscheibe platziert und dann der Klebstoff eingebracht wird, wird zum einen die Zeitspanne verringert, die der Klebstoff der Luft ausgesetzt ist und in der er oberflächlich aushärten und sein Klebvermögen beeinträchtigt werden kann. Im Idealfall wird der Klebstoff so in den ersten Spalt eingebracht, dass die sich im Spalt bildende Klebstoffraupe bereits während des Einbringens in Kontakt sowohl mit der Fahrzeugscheibe als auch mit dem Rahmengrund kommt; so wird die Zeit, die ein Oberflächenabschnitt des Klebstoffs vor dem Inkontaktkommen mit der Fahrzeugscheibe oder dem Rahmengrund kommt, auf ein unvermeidliches Minimum beschränkt.

Zum anderen bietet der Schritt a) die Möglichkeit, die Fahrzeugscheibe vor dem Einbringen des Klebstoffs relativ zum Rahmen auszurichten, so dass z.B. den Abstand zwischen der Kante der Fahrzeugscheibe und der gegenüberliegenden Rahmenflanke rings um die Fahrzeugscheibe einheitlich einzustellen, so dass nach dem Einbringen des Klebstoffs die Fahrzeugscheibe ihre endgültige Position durch eine zum Rahmengrund senkrechte Zustellbewegung erreichen kann, d.h. der Klebstoff keiner oder allenfalls minimaler Scherverformung zwischen sich gegeneinander oberflächenparallel bewegenden Oberflächen der Fahrzeugscheibe und des Rahmengrunds ausgesetzt ist.

Vorzugsweise wird die Fahrzeugscheibe in Schritt a) bereits so tief in den Rahmen eingeführt, dass dadurch ein zweiter Spalt zwischen der Kante der Fahrzeugscheibe und der Rahmenflanke gebildet wird. Wie bereits oben angedeutet, kann die Breite des zweiten Spalts justiert und insbesondere rings um die Scheibe herum oder wenigstens zwischen einander gegenüberliegenden Kanten der Fahrzeugscheibe einheitlich gemacht werden, bevor der Klebstoff in den ersten Spalt eingebracht wird.

Zum Einbringen des Klebstoffs in den ersten Spalt wird vorzugsweise eine in den zweiten Spalt eingreifende Düse verwendet. Eine solche Düse kann insbesondere zusammen mit einem Scheibenhalter Teil einer Vorrichtung zur Durchführung des Verfahrens sein, die dadurch, dass der Scheibenhalter die Scheibe im Rahmen platziert, zusammen mit diesem in eine Position gelangt, in der mit dem Einbringen des Klebstoffs in den ersten Spalt begonnen werden kann.

Um den Klebstoff entlang des ersten Spalts zu verteilen, sollte die Düse relativ zur Fahrzeugscheibe bzw. dem Scheibenhalter bewegbar sein. Zu diesem Zweck kann eine Führung, entlang derer die Düse bewegbar ist, mit dem Scheibenhalter zu einer Baueinheit verbunden sein.

Um eine exakte Ausrichtung der Fahrzeugscheibe relativ zum Rahmen vor der Einbringung des Klebstoffs zu ermöglichen, sollte der Weg der auf die Einbringung des Klebstoffs folgenden Zustellbewegung kurz sein; insbesondere der zweite Spalt bereits vorhanden sein, oder die Breite des zweiten Spalts, die sich durch die Zustellbewegung ergibt, sollte bereits erkennbar sein. Deshalb ist bevorzugt, dass die Fahrzeugscheibe in der Zustellbewegung des Schritts c) einen Weg von maximal 5 mm, vorzugsweise maximal 3 mm, zurücklegt.

Andererseits sollte der erste Spalt nicht bereits zur Zeit des Schritts b) so eng sein, dass dadurch die Ausbreitung des Klebstoffs im ersten Spalt beeinträchtigt wird und insbesondere der Klebstoff durch die Zustellbewegung wieder aus dem ersten Spalt herausgedrängt wird, ohne ihn vollständig auszufüllen. Daher sollte der in der Zustellbewegung zurückgelegte Weg wenigstens einem Drittel der Breite des ersten Spalts zur Zeit des Schritts b) entsprechen.

Um einen festen Sitz der Fahrzeugscheibe garantieren zu können, sollte Klebstoff nicht nur im ersten Spalt vorhanden sein, sondern die Fahrzeugscheibe auch entlang ihrer Kanten umfangen. Zu diesem Zweck kann der Hub der Zustellbewegung bemessen sein, um Klebstoff aus dem ersten Spalt in den zweiten Spalt zu verdrängen.

Als Klebstoff kommt insbesondere ein Polyurethanklebstoff wie etwa Sikaflex 268 in Betracht.

Die Aufgabe wird zum anderen gelöst durch eine Vorrichtung zum Durchführen des oben beschriebenen Verfahrens, mit einem Scheibenhalter, der zur Durchführung der Bewegungen der Verfahrensschritte a) und c) in mehreren Freiheitsgraden bewegbar ist, und einer Düse zur Abgabe des Klebstoffs, die auf einer mit dem Scheibenhalter zu einer Baueinheit verbundenen Führung um den Scheibenhalter herum bewegbar ist.

Weitere Merkmale und Vorteile der Erfindung ergeben sich aus der nachfolgenden Beschreibung von Ausführungsbeispielen unter Bezugnahme auf die beigefügten Figuren. Es zeigen:
Fig. 1 eine perspektivische Ansicht einer Vorrichtung zur Durchführung des Verfahrens, bestückt mit einer Fahrzeugscheibe, und eines Rahmens, in dem die Fahrzeugscheibe montiert werden soll;
Fig. 2 einen schematischen Schnitt durch den Rahmen und die darin platzierte Fahrzeugscheibe;
Fig. 3 einen Schnitt durch den Rahmen und die Fahrzeugscheibe nach Einbringung des Klebstoffs in den ersten Spalt;
Fig. 4 einen Schnitt durch den Rahmen und die Fahrzeugscheibe nach der Zustellbewegung.
Fig. 5 einen zu Fig. 3 analogen Schnitt gemäß einer ersten Abwandlung der Erfindung; und
Fig. 6 einen zu Fig. 3 analogen Schnitt gemäß einer zweiten Abwandlung.

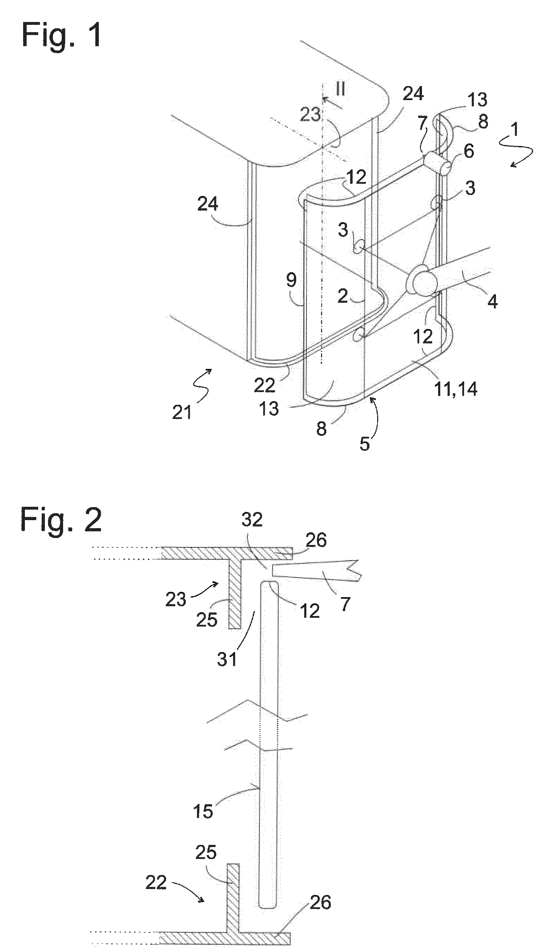

Eine in Fig. 1 gezeigte Bestückungsvorrichtung 1 umfasst ein Gestell 2, das mit mehreren mit Saugnäpfen 3 bestückt ist, die eine Fahrzeugscheibe 11 angesaugt halten. Die Saugnäpfe 3 sind über eine Saugleitung mit Unterdruck oder mit Atmosphärendruck beaufschlagbar, um die Fahrzeugscheibe 11 aufzunehmen und festzuhalten bzw. sie nach erfolgter Montage freizugeben. Das Gestell 2 ist seinerseits an einem Roboterarm 4 gehalten und von diesem in mehreren Translations- und Rotationsfreiheitsgraden bewegbar. Der Roboterarm 4 ist von an sich bekannter Bauart und deshalb in der Fig. nur fragmentarisch dargestellt.

Ein äußerer Rahmen des Gestells 2 ist durch eine Schiene 5 gebildet, auf der ein Klebstoffdispenser 6 mit einer Düse 7 beweglich ist. Die Form der Schiene 5 ist dem Verlauf von Kanten 12 der Fahrzeugscheibe 11 nachgebildet, um die Düse 7, während der Klebstoffdispenser 6 auf der Schiene 5 umläuft, exakt an den Kanten 12 entlangführen zu können.

Im in Fig. 1 gezeigten Fall ist die Fahrzeugscheibe 11 die Frontscheibe einer Fahrerkabine eines landwirtschaftlichen Nutzfahrzeugs wie etwa eines Mähdreschers oder eines Feldhäckslers, deren Ausdehnung, bezogen auf ihre Einbaulage im Fahrzeug, in der Vertikalen größer ist als in der Horizontalen, um dem Fahrer freien Blick auf einen am Fahrzeug montierten Erntevorsatz und eine unmittelbar davor liegende Bodenoberfläche zu gewähren. Überdies kann die Fahrzeugscheibe, insbesondere an ihren seitlichen Rändern, um eine zu den seitlichen Rändern im Wesentlichen parallele Achse gekrümmte Bereiche 13 aufweisen, damit vertikale Säulen eines Rahmens, in dem die Fahrzeugscheibe am Fahrzeug montiert wird, in Fahrzeuglängsrichtung hinter einen mittleren Bereich 14 zurückspringen können und somit dem Fahrer auch in der Horizontalen ein großer freier Blickwinkel geboten werden kann, der ihm eine durch den Rahmen unbeeinträchtigte Sicht über die gesamte Breite des Erntevorsatzes ermöglicht.

Entsprechend der Wölbung der Fahrzeugscheibe 11 kann auch die Schiene 5 gekrümmte Abschnitte 8 im Übergangsbereich zwischen horizontalen und vertikalen Abschnitten aufweisen, und der Querschnitt der Schiene kann in den sich gegenüberliegenden vertikalen Abschnitten 9 jeweils gegeneinander verdreht sein, um eine entsprechende Verdrehung auch der Längsachse des Klebstoffdispensers 6 während seines Umlaufs auf der Schiene 5 zu erzwingen.

Der Fahrzeugscheibe 1 gegenüberliegend ist in Fig. 1 der bereits erwähnte Rahmen 21 der Fahrerkabine gezeigt. Der Rahmen 21 umfasst zwei horizontale Profile 22, 23, die jeweils die Vorderkante einer Bodenplatte und eines Dachs der Fahrerkabine bilden, sowie zwei im wesentlichen vertikale Profile 24, die sich als A-Säulen der Fahrerkabine zwischen der Bodenplatte und dem Dach erstrecken. Die horizontalen Profile 22, 23 sind hier an ihrer Fahrzeugscheibe 11 zugewandten Seite konvex gekrümmt.

Wie in Fig. 2 zu erkennen, umfassen die Profile 22, 23, 24 jeweils einen im Querschnitt L-förmigen Abschnitt mit einem Schenkel, der einen der Innenseite 15 der Fahrzeugscheibe 11 zugewandten Rahmengrund 25 bildet, und einen Schenkel, der eine Rahmenflanke 26 bildet, die der Kante 12 der Fahrzeugscheibe 11 gegenüberliegt.

Im in Fig. 2 gezeigten Stadium ist die Fahrzeugscheibe 11 durch den Roboterarm 4 in dem Rahmen 21 gehalten, ohne dessen Profile 22, 23, 24 zu berühren. In diesem Stadium kann die Position der Fahrzeugscheibe exakt justiert werden, um rings um die Fahrzeugscheibe 11 herum eine gleichbleibende Breite eines ersten Spalts 31 zwischen deren Innenseite 15 und dem Rahmengrund 25 sowie eines zweiten Spalts 32 zwischen der Kante 12 und der Rahmenflanke 26 einzustellen.

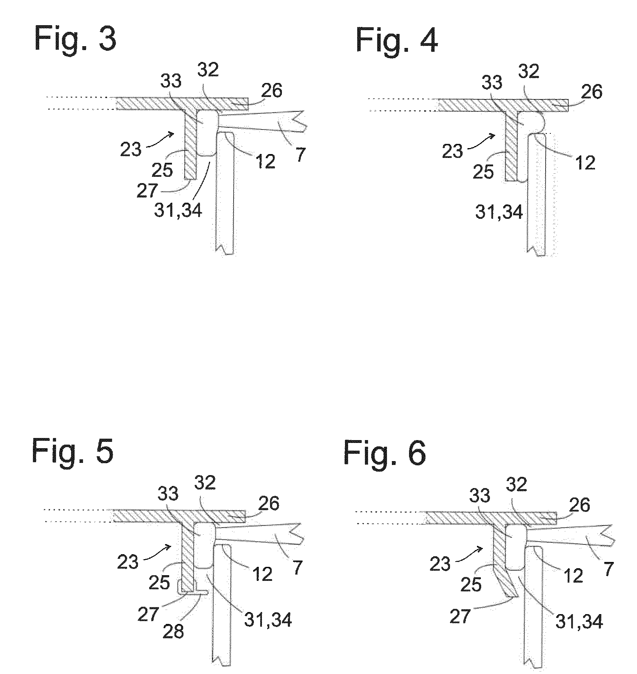

Die Breite des Spalts 32 ist ausreichend, um darin die Düse 7 einführen zu können und aus dieser Düse Klebstoff (siehe Fig. 3) in Richtung des Rahmengrunds 25 ausstoßen zu können. Während des Ausstoßes von Klebstoff aus der Düse 7 wird der Klebstoffdispenser 6 entlang der Schiene 5 kontinuierlich angetrieben. Die Bewegungsgeschwindigkeit des Klebstoffdispensers 6, die Ausstoßrate des Klebstoffs und die Abmessungen des Spalts 31 sind so aneinander angepasst, dass eine Klebstoffraupe 33 gebildet wird, die mit dem Rahmengrund 25 und mit der Innenseite 15 in Kontakt kommt, aber einen von der Rahmenflanke 26 abgewandten Teil 34 des Spalts 31 leer lässt.

Nachdem die Klebstoffraupe 33 entlang der Profile 22, 23, 24 durchgehend in den Spalt 31 eingebracht worden ist, wird durch eine Zustellbewegung des Roboterarms 4 der Spalt 31 verengt. Dies zwingt den noch plastischen Klebstoff, zu zwei Seiten hin auszuweichen und so einerseits den zunächst leer gebliebenen Teil 34 des Spalts 31 auszufüllen und andererseits in den Spalt 32 zwischen Kante 11 und Rahmenflanke 26 einzudringen. Da die Fahrzeugscheibe 11 somit auch in den zu ihrer Innenseite tangentialen Richtungen durch die Klebstoffraupe 33 in ihrer Beweglichkeit eingeschränkt ist, kann der Roboterarm 4 die Fahrzeugscheibe 11 noch vor dem vollständigen Aushärten des Klebstoffs freigeben und für die Montage einer weiteren Fahrzeugscheibe eingesetzt werden.

Im Falle der Fig. 3 muss durch eine passende Wahl der Weglänge der Zustellbewegung sichergestellt werden, dass einerseits zwar der freigebliebene Teil 34 des Spalts 31 von der Klebstoffraupe 33 ausgefüllt wird, diese gleichzeitig aber auch nicht unnötig weit über eine Innenkante 27 des Rahmengrunds 25 vorrückt und dort einen störenden Wulst bildet. Um dies zu verhindern, ist gemäß einer in Fig. 5 gezeigten Abwandlung an der Innenkante 27 ein Dichtprofil 28 aus Elastomer angebracht, das im Laufe der Zustellbewegung mit der Innenseite 15 in Kontakt kommt und spätestens dann ein Vordringen der Klebstoffraupe über die Innenkante 27 unterbindet und den Klebstoff dazu zwingt, stattdessen in den Spalt 32 auszuweichen.

Eine ähnliche Wirkung wird gemäß der in Fig. 6 gezeigten Variante durch eine geeignete Profilierung des Rahmenbodens 25 erreicht: je kleiner der Abstand zwischen der Innenseite 15 und dem Rahmenboden 25 ist, umso größer ist der Widerstand, der überwunden werden muss, um den viskosen Klebstoff dazu zu zwingen, sich in dem Spalt 31 auszubreiten. Deshalb ist das Profil des Rahmenbodens 25 hier so ausgelegt, dass der Abstand zwischen Rahmenboden 25 und Innenseite 15 zur Innenkante 27 des Rahmenbodens 25 hin kleiner wird. Während somit während des Einbringens des Klebstoffs ein großer Abstand zwischen Rahmenboden 25 und Innenseite 15 die Ausbreitung des Klebstoffs erleichtert, wird im freigebliebenen Teil 34 diese Ausbreitung umso schwerer, je näher der Klebstoff an die Kante 27 heranrückt. Die Zustellbewegung kann daher kraftgesteuert erfolgen: es ist nicht nötig, vorab eine Weglänge der Zustellbewegung abzuschätzen, die ausreichen müsste, um den Klebstoff sich über den gesamten Querschnitt des Spalts 31 bis zur Kante 27 ausbreiten zu lassen, sondern die Zustellbewegung wird beendet, wenn eine Zunahme der Kraft, die der Klebstoff der Zustellbewegung entgegensetzt, darauf hinweist, dass dieser in einen engen Teil des Spalts 31 nahe der Kante 27 vorzurücken beginnt.

Einer vereinfachten Ausgestaltung des Verfahrens zufolge ist die Platzierung der Fahrzeugscheibe 11 durch den Roboterarm 4 ersetzt durch eine manuelle Platzierung am Rahmen 21. Insbesondere bei dieser Ausgestaltung ist es wünschenswert, dass der Rahmen 21 einen nachgiebigen Anschlag wie etwa das Dichtprofil 28 aufweist, oder dass der Rahmenboden 25 selber in der Nähe der Innenkante 27 deformierbar ist, so dass die Fahrzeugscheibe 11 zunächst in einem ersten Abstand vom Rahmenboden 25 stabil positioniert werden kann und der Klebstoff in den dadurch offengehaltenen Spalt 31 eingebracht werden kann. Denkbar ist in diesem Fall auch, anstelle eines nachgiebigen Anschlags zunächst einen starren Anschlag von gleichem Querschnitt wie das Dichtprofil 28 auf den Rahmenboden 25 aufzustecken und diesen nach Einbringung des Klebstoffs zu entfernen, um dann die Fahrzeugscheibe 11 gegen den Rahmenboden 25 drücken und den Klebstoff zur Ausbreitung im Spalt 31 zwingen zu können.

Die Einbringung des Klebstoffs kann in diesem Fall mittels eines von Hand geführten oder eines maschinell geführten Dispensers 6 erfolgen.

### Bezugszeichenliste

- 1: Bestückungsvorrichtung
- 2: Gestell
- 3: Saugnapf
- 4: Roboterarm
- 5: Schiene
- 6: Klebstoffdispenser
- 7: Düse
- 11: Fahrzeugscheibe
- 12: Kante
- 13: gekrümmter Bereich
- 14: mittlerer Bereich
- 15: Kante
- 21: Rahmen
- 22: Profil
- 23: Profil
- 24: Profil
- 25: Rahmengrund
- 26: Rahmenflanke
- 27: Innenkante
- 28: Dichtprofil
- 31: erster Spalt
- 32: zweiter Spalt
- 33: Klebstoffraupe
- 34: leerer Teil

## Patentansprüche

1. Verfahren zum Montieren einer Fahrzeugscheibe (11) in einem Rahmen (21), der einen nach der Montage einer Hauptoberfläche (15) der Fahrzeugscheibe (11) gegenüberliegenden Rahmengrund (25) und eine einer Kante (12) der Fahrzeugscheibe (11) gegenüberliegende Rahmenflanke (26) umfasst, mit den Schritten
a) Platzieren der Fahrzeugscheibe (11) am Rahmen (21)) unter Freihaltung eines ersten Spalts (31) zwischen der Hauptoberfläche (15) und dem Rahmengrund (25),
b) Einbringen eines Klebstoffs in den ersten Spalt (31);
c) Zustellen der Fahrzeugscheibe (11) in Richtung des Rahmengrunds (25).

2. Verfahren nach Anspruch 1, **dadurch gekennzeichnet, dass** in Schritt a) ein zweiter Spalt (32) zwischen der Kante (12) und der Rahmenflanke (26) gebildet wird und die Breite des zweiten Spalts (32) justiert wird.

3. Verfahren nach Anspruch 2, **dadurch gekennzeichnet, dass** der Klebstoff mittels einer in den zweiten Spalt (32) eingreifenden Düse (7) eingebracht wird.

4. Verfahren nach einem der vorhergehenden Ansprüche, **dadurch gekennzeichnet, dass** die Fahrzeugscheibe (11) in der Zustellbewegung des Schritts c) einen Weg von maximal 5 mm, vorzugsweise maximal 3 mm, zurücklegt.

5. Verfahren nach einem der vorhergehenden Ansprüche, **dadurch gekennzeichnet, dass** die Breite des ersten Spalts durch die Zustellbewegung um wenigstens ein Drittel vermindert wird.

6. Verfahren nach einem der vorhergehenden Ansprüche, **dadurch gekennzeichnet, dass** der Hub der Zustellbewegung bemessen ist, um Klebstoff aus dem ersten Spalt (31) in den zweiten Spalt (32) zu verdrängen.

7. Verfahren nach einem der vorhergehenden Ansprüche, **dadurch gekennzeichnet, dass** der Klebstoff ein Polyurethanklebstoff ist.

8. Vorrichtung zum Durchführen des Verfahrens nach einem der vorhergehenden Ansprüche, mit einem in mehreren Freiheitsgraden bewegbaren Scheibenhalter (2, 3) und einer Düse (7) zur Abgabe des Klebstoffs, **dadurch gekennzeichnet, dass** die Düse auf einer mit dem Scheibenhalter (2, 3) zu einer Baueinheit verbundenen Führung (5) um den Scheibenhalter (2, 3) herum bewegbar ist.

## Claims

1. A method of fitting a vehicle window (11) in a frame (21) which includes a frame base (25) which after fitting is in opposite relationship to a main surface (15) of the vehicle window (11) and a frame flank (26) which is in opposite relationship to an edge (12) of the vehicle window (11), comprising the steps:
a) placing the vehicle window (11) on the frame (21) while maintaining a first gap (31) between the main surface (15) and the frame base (25),
b) introducing an adhesive into the first gap (31), and
c) feeding the vehicle window (11) in the direction of the frame base (25).

2. A method according to claim 1 **characterised in that** in step a) a second gap (32) is formed between the edge (12) and the frame flank (26) and the width of the second gap (32) is adjusted.

3. A method according to claim 2 **characterised in that** the adhesive is introduced by means of a nozzle (7) engaging into the second gap (32).

4. A method according to one of the preceding claims **characterised in that** the vehicle window (11) in the feed movement of step c) covers a distance of a maximum of 5 mm, preferably a maximum of 3 mm.

5. A method according to one of the preceding claims **characterised in that** the width of the first gap is reduced by the feed movement by at least a third.

6. A method according to one of the preceding claims **characterised in that** the stroke of the feed movement is of such a dimension as to displace adhesive from the first gap (31) into the second gap (32).

7. A method according to one of the preceding claims **characterised in that** the adhesive is a polyurethane adhesive.

8. Apparatus for carrying out the method according to one of the preceding claims comprising a window holder (2, 3) moveable in a plurality of degrees of freedom and a nozzle (7) for discharge of the adhesive, **characterised in that** the nozzle is moveable around the window holder (2) on a guide (5) connected to the window holder (2, 3) to form a structural unit.

## Revendications

1. Procédé de montage d'une vitre de véhicule (11) dans un cadre (21) qui englobe un fond de cadre (25), situé après le montage en face d'une surface principale (15) de la vitre de véhicule (11), et un flanc de cadre (26) situé en face d'un chant (12) de la vitre de véhicule (11), comprenant les étapes consistant à
a) présenter la vitre de véhicule (11) au niveau du cadre (21) en ménageant un premier interstice (31) entre la surface principale (15) et le fond de cadre (25),
b) introduire un adhésif dans le premier interstice (31) ;
c) avancer la vitre de véhicule (11) en direction du fond de cadre (25).

2. Procédé selon la revendication 1, **caractérisé en ce que**, à l'étape a), un second interstice (32) est formé entre le chant (12) et le flanc de cadre (26), et la largeur du second interstice (32) est ajustée.

3. Procédé selon la revendication 2, **caractérisé en ce que** l'adhésif est introduit au moyen d'une buse (7) pénétrant dans le second interstice (32).

4. Procédé selon une des revendications précédentes, **caractérisé en ce que**, lors du mouvement d'avance de l'étape c), la vitre de véhicule (11) parcourt une course maximale de 5 mm, de préférence maximale de 3 mm.

5. Procédé selon une des revendications précédentes, **caractérisé en ce que** la largeur du premier interstice est diminuée d'au moins un tiers par le mouvement d'avance.

6. Procédé selon une des revendications précédentes, **caractérisé en ce que** la course du mouvement d'avance est calculée pour refouler de l'adhésif hors du premier interstice (31) vers le second interstice (32).

7. Procédé selon une des revendications précédentes, **caractérisé en ce que** l'adhésif est de l'adhésif polyuréthanne.

8. Dispositif pour mettre en œuvre le procédé selon une des revendications précédentes, comprenant un porte-vitre (2, 3) déplaçable dans plusieurs degrés de liberté et une buse (7) pour délivrer l'adhésif, **caractérisé en ce que** la buse est déplaçable autour du porte-vitre (2, 3) sur un guide (5) relié au porte-vitre (2, 3) sous la forme d'une unité structurelle.
